# EUROPEAN PATENT APPLICATION

(11) **EP 1 974 791 A1**
(43) Date of publication of application: **01.10.2008**
(21) Application number: 06843256.6
(22) Date of filing: 26.12.2006
(51) Int. Cl.: B01D 46/00, B01D 39/20, B01D 53/86, B01D 53/94, B01J 23/42, B01J 32/00, B01J 35/04, F01N 3/02, F01N 3/28

(54) **HONEYCOMB STRUCTURE AND PRODUCTION METHOD THEREOF**

(30) Priority: 26.12.2005 JP 2005371479
(71) Applicant: NGK Insulators, Ltd., Nagoya-shi, Aichi 467-8530 (JP)
(72) Inventor: KASAI, Yoshiyuki, Aichi 467-8530 (JP); YAMADA, Toshio, Aichi 467-8530 (JP); MIWA, Shinichi, Aichi 467-8530 (JP); MAKINO, Mikio, Aichi 467-8530 (JP)
(74) Representative: Paget, Hugh Charles Edward
(86) International application number: PCT/JP2006/325872
(87) International publication number: WO 2007/074808

(57) **Abstract**

A honeycomb structure excellent in thermal dispersibility upon heating and being protected from damage due to thermal stress, and an efficient method for manufacturing the honeycomb structure. The structure is provided with porous partition walls 3, functioning as a filtration layer, through which exhaust gas flowing into the cells 4 can flow out, and plugging portions 7. Additional plugging portions 8 are further disposed in the open end portions to which the plugging portions 7 are not disposed (unplugged open end portions) 5 not so as to plug unplugged open end portions 5. Each cross-sectional shape of additional plugging portions 8 in a direction perpendicular to the axial direction forms a predetermined pattern shape as a whole, and a barycenter of the pattern shape is located in almost the center of a cross section of a flow of the exhaust gas in a direction perpendicular to the axial direction.

## Description

### Technical Field

The present invention relates to a honeycomb structure and a method for manufacturing the honeycomb structure. In more detail, the present invention relates to a honeycomb structure having excellent thermal dispersibility upon heating and inhibited from being damaged due to thermal stress and to an efficient method for manufacturing the honeycomb structure.

### Background Art

The need for removing particulate matter and harmful substances in exhaust gas discharged from internal combustion engines, boilers, and the like in consideration of the influence on environment is increasing. In particular, regulations regarding removal of particulate matter (hereinbelow sometimes referred to as "PM") discharged from a diesel engine is in a state of strengthening in both Western countries and Japan, and use of a honeycomb structure as a trapping filter (hereinbelow sometimes referred to as "DPF") for removing PM is spotlighted.

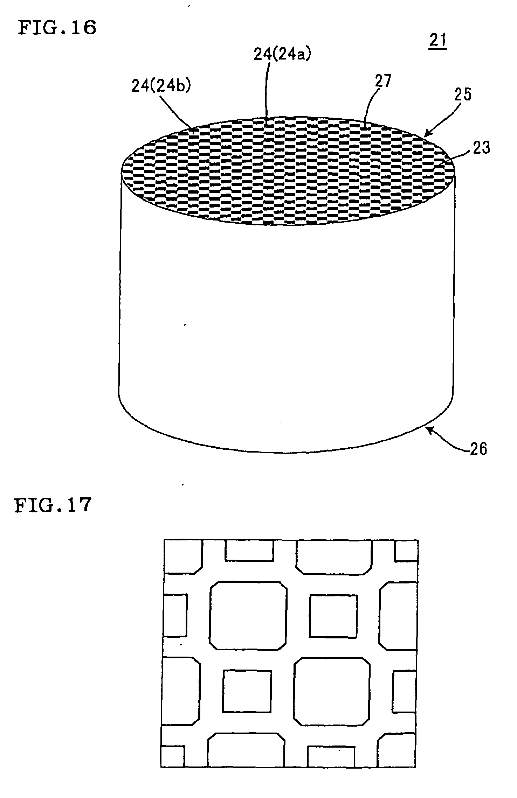

Generally, as shown in Fig. 16, a honeycomb structure 21 is provided with a porous partition walls 23 having a large number of pores disposed in such a manner that a plurality of cells 24 functioning as passages for exhaust gas are formed between two end faces, and plugging portions 27 disposed so as to alternately plug one of the open end portions on the two end faces of the cells 24. In the honeycomb structure 21 constituted in such a manner, fluid such as gas or liquid flows into the cells 24b from the inlet side open end portions 25 which are open without being plugged with the plugging portions 27, passes through the porous partition walls 23, and is discharged from adjacent cells 24a (plugged in the inlet side open end portions 25 and open in the outlet side open end portions 26). At this time, the partition walls 23 function as a filter substantially, and, for example, carbon particulate matter or the like discharged from a diesel engine accumulates on the partition walls 23. Such a honeycomb structure 21 has an uneven temperature distribution therein due to a rapid temperature change of exhaust gas or local heat generation, causing a problem of crack generation or the like in the.honeycomb structure 21. In particular, in the case where the honeycomb structure is used as a DPF, it is necessary to regenerate the honeycomb structure by combusting the accumulating carbon particulate matter. Since local temperature rise is inevitable at this time, high thermal stress is generated, and there arises a problem that the honeycomb structure is prone to be damaged easily.

Therefore, a method where segments obtained by dividing a honeycomb structure into plural pieces are integrally-joined with a bonding agent (see, for example, Patent Document 1) and a honeycomb structure where a flow passage separator is formed (see, for example, Patent document 2) have been disclosed.
Patent Document 1: JP-B-S61-51240
Patent Document 2: JP-A-2003-161136

The method disclosed in Patent Document 1 is to suppress local temperature rise by integration of the segments and is effective to a certain extent. However, it has a problem of requiring a step of unitarily joining a large number of segments after the segments are manufactured in order to manufacture one honeycomb structure. Thus, the method is not sufficiently satisfactory. In addition, in a honeycomb structure disclosed in Patent Document 2, an effect of suppressing damages due to thermal stress is not sufficiently satisfactory, either, and it has a problem of being sometimes incapable of effectively suppressing rise in temperature and pressure loss, or the like.

The present invention has been made in view of the aforementioned problems and aims to provide a honeycomb structure having excellent thermal dispersibility upon heating and inhibited from being damaged due to thermal stress and a method for manufacturing the honeycomb structure.

### Disclosure of the Invention

According to the present invention, the following honeycomb structure and method for manufacturing the honeycomb structure are provided.
[1] A honeycomb structure provided with porous partition walls having a large number of pores disposed in such a manner that a plurality of cells functioning as passages for exhaust gas are formed between two end faces, and plugging portions disposed to alternately plug one of open end portions of each of the cells on the two end faces;
wherein additional plugging portions are further disposed so as to plug unplugged open end portions of a plurality of the cells where the plugging portions are not disposed,
each cross-sectional shape of the additional plugging portions in a direction perpendicular to an axial direction forms a predetermined pattern shape as a whole, and a barycenter of the pattern shape is located in almost a center of a cross section of a flow of the exhaust gas in the direction perpendicular to the axial direction.

[2]. The honeycomb structure according to the above [1], wherein the pattern shape is a predetermined continuous shape.

[3] The honeycomb structure according to the above [1] or [2], wherein the pattern shape is almost similar to a cross-sectional outer shape of a whole honeycomb structure in the direction perpendicular to the axial direction.

[4] The honeycomb structure according to any one of the above [1] to [3], wherein disposition density per unit area in a cross section of the additional plugging portions in the direction perpendicular to the axial direction is higher in a central portion than in an outer peripheral portion.

[5] The honeycomb structure according to any one of the above [1] to [4], wherein disposition density per unit area in a cross section of the plugging portions in the direction perpendicular to the axial direction of the additional plugging portions is 1 to 45% of the disposition density per unit area.

[6] The honeycomb structure according to any one of the above [1] to [5], wherein disposition density per unit area in the cross section of the additional plugging portions in the direction perpendicular to the axial direction in the central portion is 3 to 45% of the disposition density per unit area of the plugging portions.

[7] The honeycomb structure according to any one of the above [1] to [6], wherein the cross-sectional shape of the cells in the direction perpendicular to the axial direction is a shape of a combination of a quadrangle and an octagon.

[8] The honeycomb structure according to the above [7], wherein the plugging portions in an inlet side end face locating on the inlet side of the end faces are disposed in the open end portions of the cells having a quadrangular cross section.

[9] The honeycomb structure according to any one of the above [1] to [8], wherein thickness of at least a part of the pa.rtition walls constituting the cells having the additional plugging portions disposed therein is larger than that of the partition walls constituting the cells having the plugging portions.

[10] The honeycomb structure according to any one of the above [1] to [9], wherein the additional plugging portions are constituted of a material different from that for the partition walls.

[11] The honeycomb structure according to any one of the above [1] to [10], wherein the additional plugging portions are disposed in a region 5 mm or more apart from an outer periphery of the whole cross section in the direction perpendicular to the axial direction.

[12] The honeycomb structure according to any one of the above [1] to [11], wherein the partition walls contain as a main crystal at least one kind selected from the group consisting of cordierite, mullite, alumina, silicon carbide (SiC), silicon nitride, aluminum titanate, lithium aluminum silicate (LAS), and zirconium phosphate.

[13] The honeycomb structure according to any one of the above [1] to [12], wherein heat capacity per unit length of the additional plugging portions is 1.2 to 10 times larger than that of the partition walls.

[14] The honeycomb structure according to any one of the above [1] to [13], wherein heat capacity per unit volume of the additional plugging portions is 1. 2 to 10 times larger than that of the partition walls.

[15] The honeycomb structure according to any one of the above [1] to [14], wherein thermal conductivity in the axial direction of the additional plugging portions is 1.2 to 10 times larger than that of the partition walls.

[16] The honeycomb structure according to any one of the above [1] to [15], wherein thermal conductivity in the axial direction of the additional plugging portions is 1.2 to 5 times larger than that in the direction perpendicular to the axial direction.

[17] The honeycomb structure according to any one of the above [1] to [16], wherein disposition length in the axial direction of the additional plugging portions is 0.1 to 0.8 of the whole length and 1.5 times or more larger than that in the axial direction of the plugging portions.

[18] The honeycomb structure according to any one of the above [1] to [17], wherein an average thermal expansion coefficient in the axial direction of the honeycomb structure at 40 to 800°C is 2.0x10⁻⁶/°C or less.

[19] The honeycomb structure according to any one of the above [1] to [18], wherein the partition walls have a unitary structure.

[20] The honeycomb structure according to any one of the above [1] to [19], wherein the exhaust gas is discharged from an internal combustion engine.

[21] A honeycomb catalyst body having a catalyst capable of purifying the exhaust gas and loaded on at least a part of inner surfaces of the partition walls and/or inner surfaces of pores of the partition walls of the honeycomb structure according to any one of the above [1] to [20].

[22] An exhaust gas treatment apparatus provided with the honeycomb structure according to any one of the above [1] to [20] or the honeycomb catalyst body according to the above [21].

[23] A method for manufacturing a honeycomb structure to obtain a honeycomb structure according to any one of the above [1] to [20], comprising the steps of:
disposing a mask and/or a film having holes of a predetermined size on the two end faces of a honeycomb formed body obtained by forming clay into a honeycomb shape or the honeycomb structure obtained by firing the honeycomb formed body, and injecting each material into portions for forming the plugging portions and the additional plugging portions of the cells through the mask and/or the film to form the plugging portions and the additional plugging portions,
wherein, in the mask and/or the film, size of the holes corresponding to the additional plugging portions is different from that of the holes corresponding to the plugging portions.

[24] The method for manufacturing the honeycomb structure according to the above [23], wherein, in the mask and/or the film, size of the holes corresponding to the additional plugging portions is larger than that of the holes corresponding to the plugging portions.

[25] The method for manufacturing the honeycomb structure according to the above [23] or [24], wherein the material for the plugging portions and the additional plugging portions is injected by an indentation technique.

[26] The method for manufacturing the honeycomb structure according to the above [23] or [24], wherein the material for the plugging portions and the additional plugging portions is injected by a suction technique.

[27] The method for manufacturing the honeycomb structure according to any one of the above [23] to [26], wherein the injection of the material for the plugging portions and the injection of the material for the additional plugging portions are conducted separately, and each of the injections are conducted at one time or separately in several times.

[28] The method for manufacturing the honeycomb structure according to any one of the above [23] to [27], wherein firing is conducted after the plugging portions and the additional plugging portions are formed.

Since a honeycomb structure of the present invention has excellent thermaldispersibility upon heating, the honeycomb structure is inhibited from being damaged due to thermal stress. In addition, a method for manufacturing a honeycomb structure of the present invention enables to manufacture the aforementioned honeycomb structure simply at low costs.

### Brief Description of the Drawings

[Fig. 1] Fig. 1 is a perspective view schematically showing an embodiment of a honeycomb structure of the present invention.
[Fig. 2] Fig.' 2 is a plan view schematically showing one end face of the honeycomb structure shown in Fig. 1.
[Fig. 3] Fig. 3 is a plan view schematically showing the other end face of the honeycomb structure shown in Fig. 1.
[Fig. 4] Fig. 4 is a cross-sectional view along A-A line of the honeycomb structure shown in Fig. 2.
[Fig. 5] Fig. 5 is a plan view showing an example of a pattern shape (lattice shape) in a cross section in a direction perpendicular to the axial direction of the additional plugging portions in an embodiment of the honeycomb structure of the present invention.
[Fig. 6] Fig. 6 is a plan view showing an example of a pattern shape (shape of a combination of quadrangles) in a cross section in a direction perpendicular to the axial direction of the additional plugging portions in an embodiment of the honeycomb structure of the present invention.
[Fig. 7] Fig. 7 is a plan view showing an example of a pattern shape (shape of a combination of quadrangles) in a cross section in a direction perpendicular to the axial direction of the additional plugging portions in an embodiment of the honeycomb structure of the present invention.
[Fig. 8] Fig. 8 is a plan view showing an example of a pattern shape (shape of a combination of small quadrangles) in a cross section in a direction perpendicular to the axial direction of the additional plugging portions in an embodiment of the honeycomb structure of the present invention.
[Fig. 9] Fig. 9 is a plan view showing an example of a pattern shape (shape of a hexagon obtained by combining triangles) in a cross section in a direction perpendicular to the axial direction of the additional plugging portions in an embodiment of the honeycomb structure of the present invention.
[Fig. 10] Fig. 10 is a plan view showing an example of a pattern shape (shape of a quadrangle with no corners) in a cross section in a direction perpendicular to the axial direction of the additional plugging portions in an embodiment of the honeycomb structure of the present invention.
[Fig. 11] Fig. 11 is a plan view showing an example of a pattern shape (shape of a cross) in a cross section in a direction perpendicular to the axial direction of the additional plugging portions in an embodiment of the honeycomb structure of the present invention.
[Fig. 12] Fig. 12 is a plan view showing an example of a pattern shape (spiral) in a cross section in a direction perpendicular to the axial direction of the additional plugging portions in an embodiment of the honeycomb structure of the present invention.
[Fig. 13] Fig. 13 is a plan view showing an example of a pattern shape (shape of a small daubed quadrangle) in a cross section in a direction perpendicular to the axial direction of the additional plugging portions in an embodiment of the honeycomb structure of the present invention.
[Fig. 14] Fig. 14 is a plan view showing an example of a pattern shape (concentric shape) in a cross section in a direction perpendicular to the axial direction of the additional plugging portions in an embodiment of the honeycomb structure of the present invention.
[Fig. 15] Fig. 15 is a plan view showing an example of a pattern shape (circler shape where the barycenter (M) of the additional plugging portions deviates from the center (centroid) (O) of the outer shape of the honeycomb structure at a predetermined deviation amount (L)) in a cross section in a direction perpendicular to the axial direction of the additional plugging portions in an embodiment of the honeycomb structure of the present invention.
[Fig. 16] Fig. 16 is a perspective view schematically showing a conventional honeycomb structure.
[Fig. 17] Fig. 17 is a plan view showing a cell shape in a direction perpendicular to the axial direction before the plugging portions and the additional plugging portions are disposed in an embodiment of the honeycomb structure of the present invention.

### Description of Reference Numerals

1: Honeycomb structure
3: Partition wall
4: Cell
4a: Cell
4b: Cell
4c: Plugged cell
5: Open end portion
6a: End face on one side
6b: End face on the other side
7: Plugging portion
8: Additional plugging portion
11: Outer peripheral face
21: Honeycomb structure
23: Partition wall
24: Cell
24a: Cell
24b: Cell
25: Open end portion on inlet side
26: Open end portion on outlet side
27: Plugging portion

### Best Mode for Carrying out the Invention

Embodiments of a honeycomb structure of the present invention and a method for manufacturing the honeycomb structure will hereinbelow be described specifically with referring to drawings.

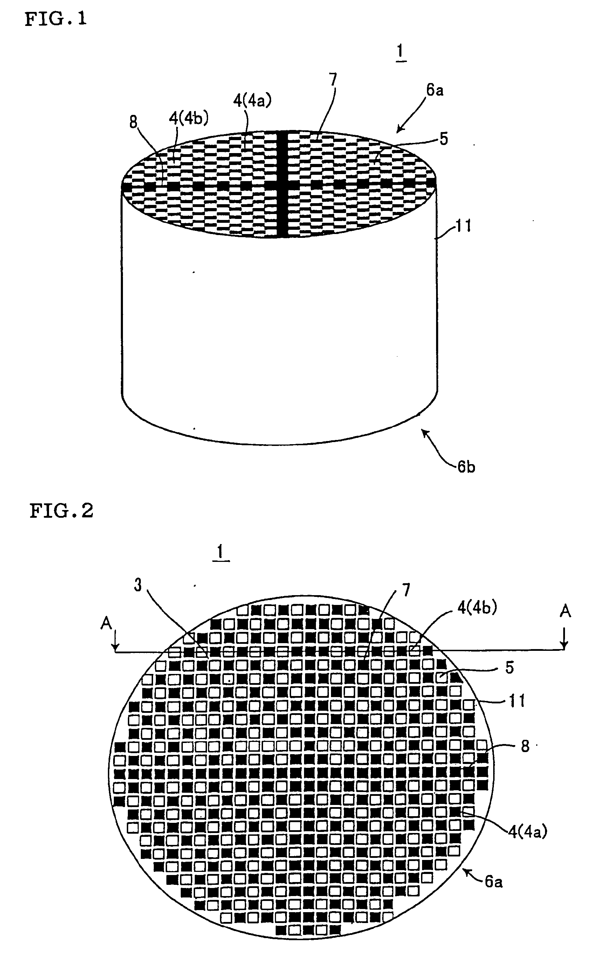

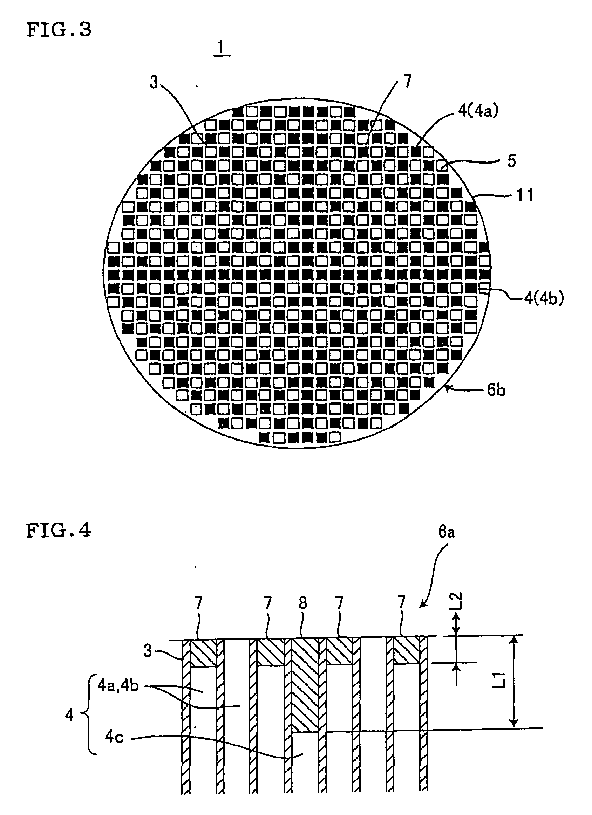

Fig. 1 is a perspective view schematically showing an embodiment of a honeycomb structure of the present invention, Fig. 2 is a plan view schematically showing one end face of the honeycomb structure shown in Fig. 1, Fig. 3 is a plan view schematically showing the other end face of the honeycomb structure shown in Fig. 1, and Fig. 4 is a cross-sectional view along A-A line of the honeycomb structure shown in Fig. 2. L1 shows disposition length in the axial direction of the plugging portion 7, and L2 shows disposition length in the axial direction of the additional plugging portion 8. As shown in Figs. 1 to 4, a honeycomb structure 1 of the present embodiment is provided with porous partition walls 3 having a large number of pores disposed in such a manner that a plurality of cells 4 (4a, 4b) functioning as passages for exhaust gas between two end faces 6a, 6b are formed and plugging portions 7 disposed to alternately plug one of open end portions 5 of each of the cells 4a, 4b in the two end faces 6a, 6b; characterized in that fluid flowing into cells 4 can flow out via the partition walls 3 functioning as a filtration layer, that additional plugging portions 8 are further disposed in open end portions 5 where the plugging portions 7 are not disposed (unplugged open end portions) so as to plug unplugged open end portions 5, that each cross-sectional shape of the additional plugging portions 8 in a direction perpendicular to the axial direction forms a predetermined pattern shape as a whole, and that a barycenter of the pattern shape is located in almost the center of a cross section of a flow of the exhaust gas in a direction perpendicular to the axial direction. Incidentally, a pattern shape may be formed by interposing the plugging portions 7 among the additional plugging portions 8.

Here, regarding the additional plugging portions 8, "each cross-sectional shape in a direction perpendicular to the axial direction forms a predetermined pattern shape as a whole" means "to form continuously or with maintaining a regular interval or a certain regularity such as every other cell and every three cells". In addition, a barycenter of the pattern shape" means a "barycenter of the additional plugging portions forming the pattern shape. Further, "a barycenter of the pattern shape is located in almost the center of a cross section of a flow of the exhaust gas in a direction perpendicular to the axial direction" means that a barycenter of the additional plugging portions forming the pattern shape is within the range of 1/6 of a diameter of outer shape (hydraulic diameter in the case other than a circle) from the centroid of an outer shape of a cross section perpendicular to the axial direction of the honeycomb structure. Further, needless to say, in the case that the additional plugging portions are disposed on both the end faces, it means a barycenter of the total of the additional plugging portions of the both end faces.

In addition, it is also effective to increase disposition density of the additional plugging portions 8 in the vicinity of the center of an exhaust gas flow and decrease disposition density of the additional plugging portions 8 of the portion apart from the center of the exhaust gas flow. In addition, the additional plugging portions 8 are disposed on at least one of the two end faces 6a, 6b and preferably disposed on both of the end faces 6a, 6b (see Figs. 2 and 3).

Thus, in the honeycomb structure 1 of the present embodiment, since additional plugging portions 8 are disposed, cells are formed wherein both of an end portion 5 on one end face 6a side, for example, an open end portion 5 on the inlet side and an open end portion 5 on the other side 6b, for example, an open end portion 5 on the outlet side are plugged (hereinbelow sometimes referred to as "plugged cells 4c"). By the plugged cells 4c, thermal dispersibility upon heating can be enhanced, and damages due to thermal stress can effectively be inhibited. Conventionally, when a honeycomb structure 1 is used as a DPF and regenerated by combusting carbon particulate matter and the like trapped by the partition walls 3, since combustion heat upon regeneration is prone to concentrate in the vicinity of the central axis of the honeycomb structure, a damage or melting of the DPF is sometimes caused due to sharp temperature rise in the case that the amount of trapped carbon particulate matter is large. The cells 4 having the additional plugging portions 8 can reduce the amount of carbon particulate matter accumulating on the partition walls 3 and heat generation upon regeneration. Further, since carbon particulate matter and the like are not trapped in the plugged cells 4c, combustion heat is not generated there upon regeneration, and the temperature there is kept lower than that in the other portion where combustion is actually performed to absorb combustion heat generated in the other portion. Thus, the cells 4c contribute to thermal dispersion and suppress rapid combustion.

In addition, in the honeycomb structure 1 of the present embodiment, each cross-sectional shape of the additional plugging portions 8 in the direction perpendicular to the axial direction forms a predetermined pattern shape as a whole, and a barycenter of the pattern shape is located in almost the center of a cross section of a flow of the exhaust gas in a direction perpendicular to the axial direction. Therefore, a large effect of lowering the highest temperature upon regeneration can be obtained.

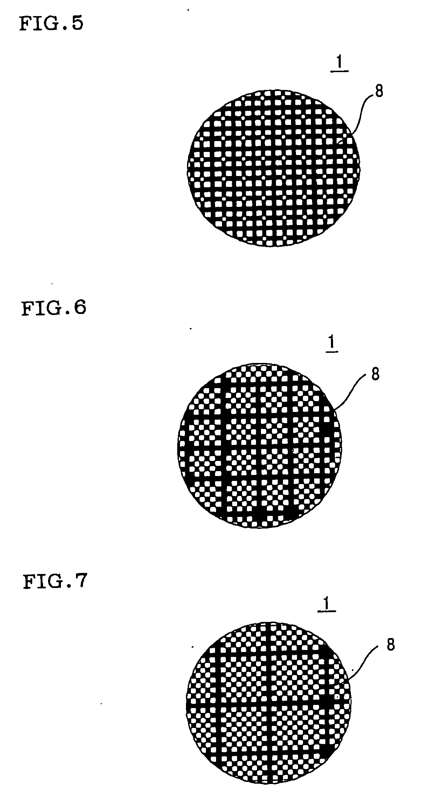

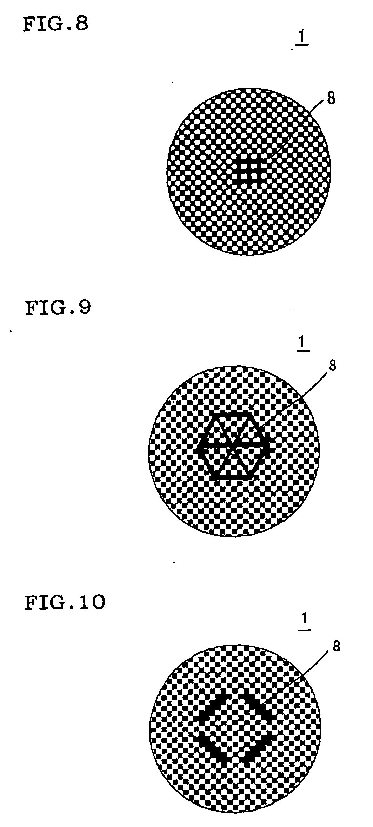

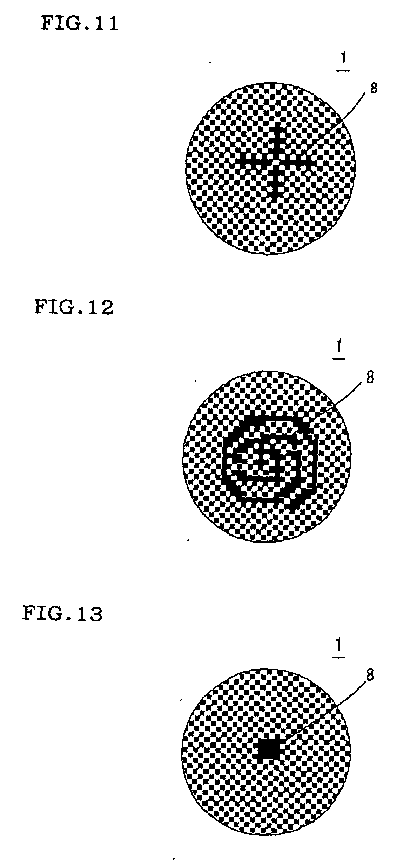

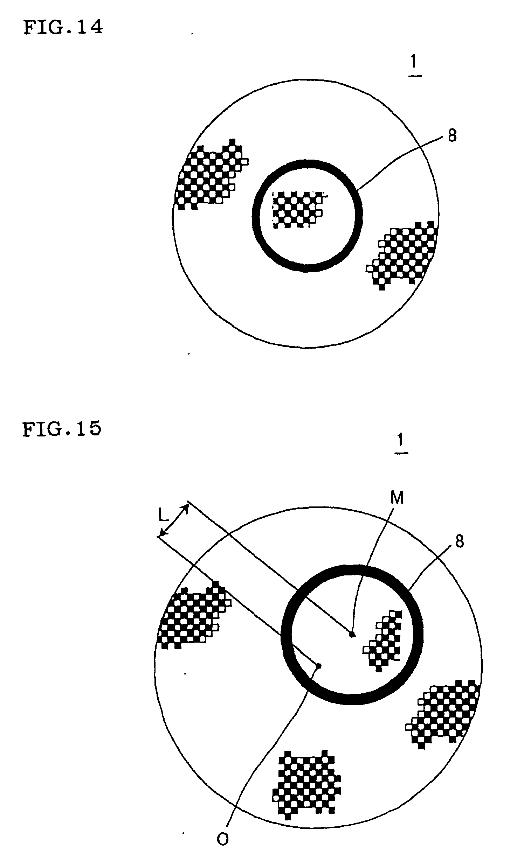

In addition, in the honeycomb structure 1 of the present embodiment, the pattern shape is preferably a predetermined continuous shape. The pattern shape of the additional plugging portions 8 in the honeycomb structure 1 shown in Figs. 1 to 3 is a cross shape having the size extending to the outer peripheral face. However, there is no particular limitation on the continuous shape of a pattern shape, and examples of the shape include a lattice shape as shown in Fig. 5, a shape of a combination of quadrangles as shown in Figs. 6 and 7, a shape of a combination of small quadrangles as shown in Fig. 8, a shape of a hexagon obtained by combining triangles as shown in Fig. 9, a shape of a quadrangle with no corners as shown in Fig. 10, a shape of a cross discontinuing in the middle as shown in Fig. 11, a spiral as shown in Fig. 12, a shape of a small daubed quadrangle as shown in Fig. 13, a concentric shape as shown in Fig. 14, and a circler shape where the barycenter (M) of the additional plugging portions deviates from the center (centroid) (O) o.f the outer shape of the honeycomb structure 1 at a predetermined deviation amount (L) . In addition, the shape may be a combination of these examples. By such a constitution, a honeycomb structure 1 can be divided into arbitrary regions by, for example, plugging cells 4c having a predetermined continuous shape. Therefore, heat generated upon combustion of carbon particulate matter and the like can be dispersed in each region, and chained combustion due to heat generation can be suppressed to effectively inhibit sharp temperature rise.

Incidentally, a "continuous shape" means a state where, for example, a line linking the nearest present additional plugging portions 8 (a plugging portion 7 may be interposed) in an end face 6a of the honeycomb structure 1 is a straight line or a curved line. As shown in Figs. 2 and 3, it is preferable to form a region continuously surrounded by the additional plugging portions 8 when the additional plugging portions 8 (a plugging portion 7 may be interposed) are continuously formed or to form a region continuously surrounded by the outer peripheral face 11 and additional plugging portions 8 when the additional plugging portions 8 are disposed up to the outer peripheral face 11 side of the honeycomb structure 2 in an end face 6a of the honeycomb structure 1 (hereinbelow sometimes referred to as a "segment region"). There may be formed a plurality of segment regions or one segment region on one end face. Incidentally, when the additional plugging portions 8 are discontinuously formed before they reach the outer peripheral face 11, a segment region may be determined by assuming an extended line of the additional plugging portions 8 in one end face 6a of the honeycomb structure 1.

In addition, it is preferable in the honeycomb structure 1 of the present embodiment that the pattern shape is almost similar to the cross-sectional outer shape of the whole honeycomb structure in the direction perpendicular to the axial direction. Such a constitution enables to effectively divide a heat generation region by a small number of additional plugging portions, thereby suppressing increase in pressure loss.

It is also preferable in the honeycomb structure 1 of the present embodiment that disposition density per unit area in a cross section of the additional plugging portions in a direction perpendicular to the axial direction is higher in the central portion than in the outer peripheral portion. Such a constitution can lower the temperature in the central portion which has the highest temperature.

In addition, in the honeycomb structure 1 of the present embodiment, disposition density per unit area in a cross section of the additional plugging portions in a direction perpendicular to the axial direction is preferably 1 to 45%, more preferably 2 to 20%, of the disposition density per unit area of the plugging portions 7. When it is below 1%, a sufficient thermal dispersion effect may not be obtained. When it is above 45%, pressure loss may be too high. When it is 20% or less, rise of pressure loss is not so much, which is more preferable.

In addition, in the honeycomb structure 1 of the present embodiment, disposition density per unit area in a cross section, of the additional plugging portions in the central portion in the direction perpendicular to the axial direction is preferably 3 to 45%, more preferably 5 to 30%, of disposition density per unit area of the plugging portions 7. When it is below 3%, a sufficient thermal dispersion effect may not be obtained. When it is above 45%, pressure loss may be too high. Such a structure enables to obtain a honeycomb structure excellent in durability.

In addition, in the honeycomb structure 1 of the present embodiment, a cross-sectional shape of the cells in the direction perpendicular to the axial direction 4 is a shape of a combination of a quadrangle and an octagon. Such a constitution enables to have different volumes in the upstream side and the downstream side of the exhaust gas with respect to the partition walls of the honeycomb structure, thereby increasing design freedom.

In addition, in the case that a cross-sectional shape of the cells in a direction perpendicular to the axial direction 4 is a combination of a quadrangle and an octagon as shown in Fig. 17 as described above, it is preferable that the plugging portions 7 in an inlet side end face 6a locating on the inlet side of the end faces 6a, 6b are disposed in the open end portions 5 of cells 4 having a quadrangular cross section. Such a constitution easily enables to make the volume on the upstream side of exhaust gas larger than that on the downstream side with respect to the partition walls of the honeycomb structure to increase an accumulation amount of PM or ash, which is preferable. At this time, a ratio of a cross-sectional area of an octagonal cell to that of a quadrangular cell in a face perpendicular to the axial direction is arbitrarily determined, and, for example, a range of 1.3 to 5 is preferable in view of pressure loss and ash accumulation amount. The range may take reciprocal numbers (1/5 to 1/1.3) (that is, a cross-sectional area of a quadrangular cell is made smaller than that of an octagonal cell) as usage.

In addition, in the honeycomb structure 1 of the present embodiment, thickness of at least a part of partition walls 3 constituting cells 4 having the additional plugging portions 8 disposed therein is preferably larger than that of partition walls constituting cells having the plugging portions 7. Such a constitution increases thermal capacity in the partition wall portion in addition to the additional plugging portions, thereby absorbing a higher amount of heat.

In addition, in the honeycomb structure 1 of the present embodiment, it is preferable that the additional plugging portions 8 are constituted of a material different from that for the partition walls 3. Such a constitution enables the additional plugging portions 8 to be produced with a material having a thermal capacity different from that for the material for the partition walls, and it is possible to design the additional plugging portions 8 to have a required thermal capacity.

In addition, in the honeycomb structure 1 of the present embodiment, it is preferable that the additional plugging portions 8 are disposed in the region 5 mm or more apart from the outer periphery of the whole cross section in the direction perpendicular to the axial direction. Such a constitution can reduce the entire mass. Incidentally, since the vicinity of the outer peripheral portion of the honeycomb structure does not have high temperature because it is cooled due to heat radiation from the outer peripheral portion, additional plugging portions are not required there in many cases.

In addition, in the honeycomb structure 1 of the present embodiment, it is preferable that the partition walls 3 contain as a main crystal at least one kind selected from the group consisting of cordierite, mullite, alumina, silicon carbide (SiC), silicon nitride, aluminum titanate, lithium aluminum silicate (LAS), and zirconium phosphate. Such a constitution enables to obtain a honeycomb structure excellent in durability.

In addition, in the honeycomb structure 1 of the present embodiment, it is preferable that the additional plugging portions 8 are constituted of the same material as the material for the partition walls 3. By such a constitution, the characteristics such as thermal expansion become almost the same as those of the partition walls to obtain good durability such as little damages at high temperature and little detachment of an additional plugging portion. Incidentally, the same holds for a material for the plugging portions 7.

In addition, in the honeycomb structure 1 of the present embodiment, heat capacity per unit length of the additional plugging portions 8 is preferably 1.2 to 10 times, more preferably 4 to 10 times, larger than that of the partition walls 3. When it is below 1.2 times, the heat absorption amount is small, and temperature may become too high. When it is above 10 times, the heat absorption amount is too large, and heat required for regeneration may fail to be secured. Such a constitution enables to obtain optimum additional plugging portions. Incidentally, for adjusting the heat capacity per unit length of the additional plugging portions 8 so as to satisfy the aforementioned conditions, it is preferable to adjust, for example, the kind of the raw materials and the amount of a pore former added to the raw materials upon manufacturing the additional plugging portions 8.

In addition, in the honeycomb structure 1 of the present embodiment, heat capacity per unit volume of the additional plugging portions 8 is preferably 1.2 to 10 times, more preferably 4 to 10 times, larger than that of the partition walls 3. When it is below 1.2 times, the heat absorption amount is small, and temperature may become too high. When it is above 10 times, the heat absorption amount is too large, and heat required for regeneration may fail to be secured. Such a constitution enables to obtain optimum additional plugging portions. Also in this case, it is preferable to adjust, for example, the kind of the raw materials and the amount of a pore former added to the raw materials upon manufacturing the additional plugging portions 8.

In addition, in the honeycomb structure 1 of the present embodiment, thermal conductivity in the axial direction of the additional plugging portions 8 is preferably 1.2 to 10 times, more preferably 2 to 4 times, larger than that of the partition walls 3. When it is below 1.2 times, thermal diffusion is insufficient, and temperature of the periphery of the additional plugging portions may become too high. When it is above 10 times, the difference in temperature between the additional plugging portions and the partition wall becomes too large upon heating or cooling, and the additional plugging portion may easily be detached due to thermal expansion difference. Such a constitution enables to obtain a honeycomb structure excellent in durability.

In addition, in the honeycomb structure 1 of the present embodiment, thermal conductivity in the axial direction of the additional plugging portions 8 is preferably 1.2 to 5 times, more preferably 3 to 5 times, larger than that in the direction perpendicular to the axial direction. When it is below 1.2, thermal diffusion in the additional plugging portions is insufficient, and temperature of the periphery of the additional plugging portions may become high. When it is above 5 times, the difference in temperature between the additional plugging portions and the partition wall 3 becomes too large upon heating or cooling, and the additional plugging portion may easily be detached due to thermal expansion difference. Such a constitution enables to obtain a honeycomb structure excellent in durability.

In addition, in a honeycomb structure 1 of the present embodiment, it is preferable that disposition length in the axial direction of the additional plugging portions 8 is 0.1 to 0.8 of the whole length and 1.5 times or more larger than that in the axial direction of the plugging portions 7 and more preferable that disposition length in the axial direction of the additional plugging portions 8 is 0.5 to 0.8 of the whole length and 3 times or more larger than that in the axial direction of the plugging portions 7. When the disposition length is out of the range of 0.1 to 0.8 of the whole length and out of the range of 1.5 times or more larger than that in the axial direction, temperature of the honeycomb structure may become too high or too low upon regeneration. Such a constitution enables to obtain a honeycomb structure excellent in durability.

In addition, in the honeycomb structure 1 of the present embodiment, average thermal expansion coefficient in the axial direction of the honeycomb structure at 40 to 800°C is preferably 2.0×10⁻⁶/°C or less, more preferably 1.0×10⁻⁶/°C or less. When it is above 2.0×10/°C, damages such as a crack may be caused in the honeycomb structure due to thermal stress. Such a constitution enables to effectively inhibit deformation or crack generation due to temperature difference in each inner portion upon heating for regeneration when the honeycomb structure is used as a filter.

In addition, in the honeycomb structure 1 of the present embodiment, it is preferable that the partition walls 3 have a unitary structure, that is, a honeycomb structure is not formed by bonding honeycomb segments obtained by dividing the partition wall portion into plural pieces with a bonding agent, but formed by unitary formation. Such a constitution enables to enhance mechanical strength and lower manufacturing cost.

Next, an embodiment of a manufacturing method of a honeycomb structure of the present invention will be described. The present embodiment is a method for manufacturing a honeycomb structure to obtain the aforementioned.honeycomb structure, comprising the steps of: disposing a mask and/or a film having holes of a predetermined size on the two end faces of a honeycomb formed body obtained by forming clay into a honeycomb shape or the honeycomb structure obtained by firing the honeycomb formed body, and injecting each material in the portions for forming the plugging portions and the additional plugging portions of the cells through the mask and/or the film to form the plugging portions and the additional plugging portions. The method is characterized in that, in the mask and/or the film, the size of the holes corresponding to the additional plugging portions is different from that of the holes corresponding to the plugging portions. Such a constitution enables to manufacture the aforementioned honeycomb structure 1 simply at low costs.

Incidentally, in the present embodiment, preparation of clay, manufacture of a honeycomb formed body, drying, firing, and the like, other than formation of the plugging portions and the additional plugging portions can be conducted according to a conventional method for manufacturing a honeycomb structure.

In the present embodiment, it is preferable that the size of the holes corresponding to the additional plugging portions is larger than that of the holes corresponding to the plugging portions. Such a constitution enables to easily inject a material for the additional plugging portions when the additional plugging portions are longer than the plugging portions.

It is preferable that the material for the plugging portions and the additional plugging portions is injected by an indentation technique. Such a constitution enables to easily determine the length of the additional plugging portions.

In addition, in the present embodiment, it is preferable that, the material for the plugging portions and the additional plugging portions is injected by a suction technique, where each material is aspirated from the opposite side of the cells. Such a constitution enables to easily manufacture long additional plugging portions.

In addition, in the present embodiment, it is preferable that the injection of the material for the plugging portions and the injection of the material for the additional plugging portions are conducted separately, and each of the injections is preferably conducted at 1 time or more and more preferably conducted at 2 times or more. Such a constitution enables to more easily manufacture long additional plugging portions.

Further, in the present embodiment, it is preferable that firing is conducted after the plugging portions and the additional plugging portions are formed. Such a constitution enables to strengthen bonding of partition walls to the plugging portion and the additional plugging portion and to reduce detachment due to vibrations or the like.

In a honeycomb catalyst body of the present invention, a catalyst capable of purifying the exhaust gas is loaded on at least a part of inner surfaces of the partition walls 3 and/or inner surfaces of pores of the partition walls of the aforementioned honeycomb structure 3. Specific examples of the catalyst include (1) gasoline engine exhaust gas purification ternary catalyst, (2) gasoline engine or diesel engine exhaust gas purification oxidation catalyst, (3) NOx selective reduction SCR catalyst, and (4) NOx adsorber catalyst.

A gasoline engine exhaust gas purification ternary catalyst includes a carrier coat for covering the partition walls of the honeycomb structure (honeycomb carrier) and a noble metal dispersed and loaded inside the carrier coat. The carrier coat is constituted of, for example, active alumina. In addition, suitable examples of the noble metal dispersed and loaded inside the carrier coat include Pt, Rh, Pd, or a combination thereof. The carrier coat further contains, for example, a compound such as cerium oxide, zirconia oxide, and silica, or a mixture thereof. Incidentally, the total amount of the noble metals is preferably 0.17 to 7.07g per liter of a volume of the honeycomb structure.

A gasoline engine or diesel engine exhaust gas purification oxidation catalyst contains a noble metal. As the noble metal, at least one kind selected from the group consisting of Pt, Rh, and Pd is preferable. Incidentally, the total amount of the noble metals is preferably 0.17 to 7.07g per liter of a volume of the honeycomb structure. In addition, a NOx selective reduction SCR catalyst contains at least one kind selected from the group consisting of metal-substituted zeolite, vanadium, titania, tungsten oxide, silver, and alumina.

A NOx adsorber catalyst contains alkali metal and/or alkali earth metal. Examples of the alkali metal include K, Na, and Li. Examples of the alkali earth metal include Ca. Incidentally, the total amount of K, Na, Li, and Ca is preferably 5g or more per liter of a volume of the honeycomb structure.

A honeycomb catalyst body of the present invention can be manufactured by loading a catalyst on the aforementioned honeycomb structure according to a manufacturing method based on a conventionally known method. Specifically, in the first place, catalyst slurry containing a catalyst is prepared. Next, the catalyst slurry is coated on surfaces of the pores of the partition walls of the honeycomb structure by a suction technique or the like. Then, the slurry is dried at room temperature or under heating conditions to obtain a honeycomb catalyst body of the present invention.

An exhaust gas treatment apparatus of the present invention is provided with the aforementioned honeycomb structure and/or a honeycomb catalyst body and can treat exhaust gas effectively.

### Example

The present invention will hereinbelow be described more specifically based on Examples. However, the present invention is by no means limited to these Examples.

### (Example 1)

Cordierite forming materials of talc, kaolin, alumina, and silica were adjusted at a compounding ratio for forming cordierite after firing. To the adjusted raw materials were added a binder, graphite and/or foaming resin as a pore former, a surfactant, and water, followed by kneading to obtain clay. The additive amount of the pore former was adjusted to obtain a porosity of 65%. The obtained clay was subjected to extrusion forming after firing using a die for giving a partition wall thickness of 0.3 mm, a cell density of 46.5 cells/ cm², and an outer diameter of 144 mm and dried to manufacture a honeycomb formed body. Incidentally, the pore former may suitably be changed depending on a required porosity, and the amount of the binder and the surfactant may also suitably be changed depending on particle size and the like of the raw materials. The both ends of the honeycomb formed body obtained above were cut off so that the honeycomb formed body has a length of 152 mm after firing. A film was applied on the both end, and holes were made in the film in a checkerwise pattern in order to form plugging portions. In addition, in order to form additional plugging portions, holes were further made in the film. The both ends of the honeycomb formed body where making holes in the film was completed was pressed against slurry having the same constitution as the above clay as the material for forming the plugging portions and the additional plugging portions to form the additional plugging portions having a pattern shape as shown in Fig. 11 on the both end faces in such a manner that the both end faces have the same pattern shape. The honeycomb formed body having the additional plugging portions formed therein was fired to obtain a wall-flow type cordierite honeycomb structure having a diameter of 144 mm and a length of 152 mm. Incidentally, though firing was performed after forming the plugging portions and the additional plugging portions in the honeycomb formed body in the present example, there may be employed a method where the plugging portions and the additional plugging portions are formed after firing, followed by firing again. Though the same material as that for partition walls of the honeycomb structure was used as slurry for forming the plugging portions and the additional plugging portions in the present example, a different material may be used.

As a catalyst, platinum (Pt) was coated on the honeycomb structure obtained above to obtain a honeycomb catalyst body. The honeycomb catalyst body was subjected to canning and arranged in an engine exhaust pipe. In this case, the centroid of the outer shape of a cross section of the honeycomb structure in a direction perpendicular to the axial direction was conformed to the barycenter of the pattern shape of the additional plugging portions. Next, load adjustment of the engine was performed. After PM of 7.5 g was accumulated on the honeycomb catalyst body, post injection was performed to conduct a regeneration experiment where, after the temperature of exhaust gas was risen to be 700.°C, the engine revolution was decreased to the idle state, and the highest temperature and the amount of destroyed PM both described later were measured. The results are shown in Table 1. Here, additional plugging density is shown by a ratio of the disposition density (number) per unit area in a cross section of the additional plugging portions 8 in a direction perpendicular to the axial direction to the disposition density (number) per unit area of the plugging portions 7. In addition, the additional plugging density was calculated with respect to one end face of the honeycomb structure. In the case that the additional plugging portions 8 were disposed on the both end faces, the sum of the additional plugging density on the both end faces was employed as the additional plugging density of the honeycomb structure.

### [Highest temperature upon regeneration]

A sheathed thermocouple having an outer diameter of 0.5 mm was disposed in each portion of a honeycomb structure to monitor a temperature profile in the honeycomb structure upon PM regeneration. By recording the highest temperature upon regeneration, inner temperature of each portion of the honeycomb structure upon regeneration was measured, and the highest temperature among the measured temperature was defined as the highest temperature upon regeneration.

### [Amount of destroyed PM]

The PM accumulation amount was increased by around 0.5 g to obtain a PM accumulation amount (amount of destroyed PM) per unit volume of a honeycomb structure when damage is generated in the honeycomb structure.

### (Examples 2 to 10, Comparative Examples 1 to 4)

The same process as in Example 1 was taken except that the position of the barycenter of the additional plugging portions was allowed to deviate from the centroid of the outer shape of a cross section of the honeycomb structure in a direction perpendicular to the axial direction by a value of a positional deviation shown in Table 1 and except for plugging depth, additional plugging depth, additional plugging density, and an additional plugging disposition pattern. The additional plugging density was changed by varying the number of the additional plugging portions, specifically the length and/or width, and the like. The results of measurement of the highest temperature upon regeneration and the amount of destroyed PM are shown in Table 1. Incidentally, here, a "disposition pattern of the additional plugging portions" means a pattern of disposition of the additional plugging portions and do not mean formation of completely the same shape as the drawings.

**[Table 1]**

| | Inlet side | | Outlet side | | Additional plugging density (%) | Deviation of barycenter of additional plugging (mm) | Highest temperature upon regeneration (°C) | Amount of destroyed PM (g/L) | Disposition pattern of additional plugging* |
|---|---|---|---|---|---|---|---|---|---|
| | Plugging depth (mm) | Additional plugging depth (mm) | Plugging depth (mm) | Additional plugging depth (mm) | | | | | |
| Comp. Ex. 1 | 10 . | 10 | 10 | None | 15 | 30 | 830 | 6.2 | Fig. 11 |
| Comp. Ex. 2 | 10 | 60 | 10 | 60 | 20 | 35 | 825 | 6.3 | Fig. 11 |
| Comp. Ex. 3 | 10 | 15 | 10 | 15 | 30 | 32 | 822 | 6.4 | Fig. 13 |
| Comp. Ex, 4 | 15 | None | 15 | 20 | 35 | 30 | 820 | 6.4 | Fig. 14 |
| Example 1 | 10 | 10 | 10 | None | 15 | 0 | 770 | 7.8 | Fig. 11 |
| Example 2 | 10 | 10 | 10 | None | 15 | 22 | 800 | 7.5 | Fig. 11 |
| Example 3 | 10 | 60 | 10 | 60 | 20 | 1 | 750 | 8.5 | Fig. 11 |
| Example 4 | 10 | 60 | 10 | 60 | 20 | 12 | 770 | 8.0 | Fig. 11 |
| Example 5 | 10 | 60 | 10 | 60 | 20 | 21 | 785 | 7.5 | Fig. 11 |
| Example 6 | 10 | 100 | 10 | 100 | 8 | 5 | 765 | 7.8 | Fig. 11 |
| Example 7 | 10 | 100 | 10 | 100 | 8 | 19 | 780 | 7.6 | Fig. 11 |
| Example 8 | 10 | 80 | 10 | 60 | 18 | 15 | 760 | 7.8 | Fig. 13 |
| Example 9 | 10 | None | 10 | 25 | 25 | 10 | 755 | 7.7 | Fig. 14 |
| Example 10 | 15 | 20 | 15 | None | 30 | 8 | 750 | 8.0 | Fig. 14 |

| | | | | | | | | | |
|---|---|---|---|---|---|---|---|---|---|
| * "disposition pattern of the additional plugging portions" means a pattern of disposition of the additional plugging portions and do not mean formation of completely the same shape as the drawings. | | | | | | | | | |

The aforementioned measurement experiment of the highest temperature upon regeneration is in the severest regeneration state in the case of being actually used in the market.

From Table 1, it can be understood that the highest temperature inside the honeycomb structure is lowered by conforming the barycenter of a pattern shape of the additional plugging portions to the centroid of the outer shape of a cross section of the honeycomb structure in a direction perpendicular to the axial direction or by locating the barycenter of a pattern shape of the additional plugging portions at almost the center of the outer shape of a cross section of the honeycomb structure in a direction perpendicular to the axial direction. This is because rapid combustion is suppressed due to thermal dispersion by forming the additional plugging portions as described above to lower the temperature inside the honeycomb structure. Further, by almost conforming the centroid of the outer shape of a cross section in a direction perpendicular to the axial direction of the honeycomb structure to the barycenter of a pattern shape of the additional plugging portions, the additional plugging portions can most effectively function in the vicinity of the center of a gas flow, where the PM amount is the highest. Thus, an effect of lowering the highest temperature inside the honeycomb structure by the additional plugging portions can be maximazed.

### (Examples 11 to 16, Comparative Examples 5 to 6)

The same process as in Example 1 was taken except for plugging depth, additional plugging depth, additional plugging density, an additional plugging disposition pattern, cross-sectional shape of cells, and deviation of the barycenter of the plugging portions. In addition, the cross-sectional shape of the cells in a direction perpendicular to the axial direction was an alternating combination of a quadrangle and an octagon as shown in Fig. 17. The area of an octagonal cell was larger than that of a quadrangular cell, and the ratio of the area of an octagonal cell to the area of a quadrangular cell was 1.6. Table 2 shows the disposition length (depth) of plugging portions and disposition length (depth) of additional plugging portions in the open end portion on the inlet side of the honeycomb catalyst body obtained above, the disposition length (depth) of plugging portions and disposition length (depth) of additional plugging portions in the open end portion on the outlet side, additional plugging density, cross-sectional shape of the cells in a direction perpendicular to the axial direction, deviation of the barycenter of the additional plugging portions, highest temperature upon regeneration, amount of destroyed PM, and disposition pattern of the additional plugging portions. Incidentally, here, a "disposition pattern of the additional plugging portions" means a pattern of disposition of the additional plugging portions and do not mean formation of completely the same shape as the drawings.

**[Table 2]**

| | Inlet side | | Outlet side | | Additional plugging density (%) | Cross-sectional shape of Cell | | Deviation of barycenter of additional plugging (mm) | Highest temperature upon regeneration (°C) | Amount of destroyed PM (g/L) | Disposition pattern of additional plugging* |
|---|---|---|---|---|---|---|---|---|---|---|---|
| | Plugging depth (mm) | Additional plugging depth (mm) | Plugging depth (mm) | Additional plugging depth (mm) | | Inlet side | Outlet side | | | | |
| Comp. Ex. 5 | 10 | 15 | 10 | 15 | 10 | Octagon | Quadrangle | 35 | 835 | 6.1 | Fig. 11 |
| Comp. Ex. 6 | 10 | None | 10 | 20 | 20 | Quadrangle | Octagon | 30 | 820 | 6.3 | Fig. 13 |
| Example 11 | 10 | 15 | 10 | 15 | 10 | Octagon | Quadrangle | 5 | 760 | 8.0 | Fig. 11 |
| Example 12 | 10 | 100 | 10 | 100 | 15 | Octagon | Quadrangle | 15 | 750 | 8.2 | Fig. 11 |
| Example 13 | 3 | 16 | 2 | 40 | 20 | Quadrangle | Octagon | 20 | 785 | 7.5 | Fig. 11 |
| Example 14 | 10 | 35 | 10 | 35 | 45 | Octagon | Quadrangle | 0 | 735 | 8.8 | Fig. 13 |
| Example 15 | 10 | None | 10 | 20 | 25 | Octagon | Quadrangle | 12 | 730 | 8.5 | Fig. 14 |
| Example 16 | 15 | 15 | 15 | 20 | 20 | Quadrangle | Octagon | 22 | 750 | 8.1 | Fig. 14 |

| | | | | | | | | | | | |
|---|---|---|---|---|---|---|---|---|---|---|---|
| * "disposition pattern of the additional plugging portions" means a pattern of disposition of the additional plugging portions and do not mean formation of completely the same shape as the drawings. | | | | | | | | | | | |

It c.an be understood from Table 2 that good results could be obtained since the highest temperature inside the honeycomb structure is lowered by conforming the barycenter of a pattern shape of the additional plugging portions to the centroid of the outer shape of a cross section of the honeycomb structure in a direction perpendicular to the axial direction or by locating the barycenter of a pattern shape of the additional plugging portions at almost the center of the outer shape of a cross section of the honeycomb structure in a direction perpendicular to the axial direction even if a cross sectional shape of the honeycomb structure in a direction perpendicular to the axial direction has a shape of a alternate combination of a quadrangle and an octagon as shown in Fig. 17.

### Industrial Applicability

A honeycomb structure and a method for manufacturing the honeycomb structure of the present invention are effectively available in various kinds of industrial fields using an internal combustion engine, a boiler, or the like, and having the problems of particulate matter and harmful substances in exhaust gas, for example, the automobile industry.

## Claims

1. A honeycomb structure provided with porous partition walls having a large number of pores disposed in such a manner that a plurality of cells functioning as passages for exhaust gas are formed between two end faces and plugging portions disposed to alternately plug one of open end portions of each of the cells on the two end faces;
wherein additional plugging portions are further disposed so as to plug unplugged open end portions of a plurality of the cells where the plugging portions are not disposed,
each cross-sectional shape of the additional plugging portions in a direction perpendicular to an axial direction forms a predetermined pattern shape as a whole, and
a barycenter of the pattern shape is located in almost a center of a cross section of a flow of the exhaust gas in the direction perpendicular to the axial direction.

2. The honeycomb structure according to Claim 1, wherein the pattern shape is a predetermined continuous shape.

3. The honeycomb structure according to Claim 1 or 2, wherein the pattern shape is almost similar to a cross-sectional outer shape of a whole honeycomb structure in the direction perpendicular to the axial direction.

4. The honeycomb structure according to any one of Claims 1 to 3, wherein disposition density per unit area in a cross section of the additional plugging portions in the direction perpendicular to the axial direction is higher in a central portion than in an outer peripheral portion.

5. A honeycomb structure according to any one of Claims 1 to 4, wherein disposition density per unit area in a cross section of the plugging portions in the direction perpendicular to the axial direction of the additional plugging portions is 1 to 45% of the disposition density per unit area.

6. A honeycomb structure according to any one of Claims 1 to 5, wherein disposition density per unit area in the cross section of the additional plugging portions in the direction perpendicular to the axial direction in the central portion is 3 to 45% of the disposition density per unit area of the plugging portions.

7. The honeycomb structure according to any one of Claims 1 to 6, wherein the cross-sectional shape of the cells in the direction perpendicular to the axial direction is a shape of a combination of a quadrangle and an octagon.

8. The honeycomb structure according to Claim 7, wherein the plugging portions in an inlet side end face locating on the inlet side of the end faces are disposed in the open end portions of the cells having a quadrangular cross section.

9. The honeycomb structure according to any one of Claims 1 to 8, wherein thickness of at least a part of the partition walls constituting the cells having the additional plugging portions disposed therein is larger than that of the partition walls constituting the cells having the plugging portions.

10. The honeycomb structure according to any one of Claims 1 to 9, wherein the additional plugging portions are constituted of a material different from that for the partition walls.

11. The honeycomb structure according to any one of Claims 1 to 10, wherein the additional plugging portions are disposed in a region 5 mm or more apart from an outer periphery of the whole cross section in the direction perpendicular to the axial direction.

12. The honeycomb structure according to any one of Claims 1 to 11, wherein the partition walls contain as a main crystal at least one kind selected from the group consisting of cordierite, mullite, alumina, silicon carbide (SiC), silicon nitride, aluminum titanate, lithium aluminum silicate (LAS), and zirconium phosphate.

13. The honeycomb structure according to any one of Claims 1 to 12, wherein heat capacity per unit length of the additional plugging portions is 1.2 to 10 times larger than that of the partition walls.

14. The honeycomb structure according to any one of Claims 1 to 13, wherein heat capacity per unit volume of the additional plugging portions is 1.2 to 10 times larger than that of the partition walls.

15. The honeycomb structure according to any one of Claims 1 to 14, wherein thermal conductivity in the axial direction of the additional plugging portions is 1. 2 to 10 times larger than that of the partition walls.

16. The honeycomb structure according to any one of Claims 1 to 15, wherein thermal conductivity in the axial direction of the additional plugging portions is 1.2 to 5 times larger than that in the direction perpendicular to the axial direction.

17. The honeycomb structure according to any one of Claims 1 to 16, wherein disposition length in the axial direction of the additional plugging portions is 0.1 to 0.8 of the whole length and 1.5 times or more larger than that in the axial direction of the plugging portions.

18. The honeycomb structure according to any one of Claims 1 to 17, wherein an average thermal expansion coefficient in the axial direction of the honeycomb structure at 40 to 800°C is 2.0×10⁻⁶/°C or less.

19. The honeycomb structure according to any one of Claims 1 to 18, wherein the partition walls have a unitary structure.

20. The honeycomb structure according to any one of Claims 1 to 19, wherein the exhaust gas is discharged from an internal combustion engine.

21. A honeycomb catalyst body having a catalyst capable of purifying the exhaust gas and loaded on at least a part of inner surfaces of the partition walls and/or inner surfaces of pores of the partition walls of the honeycomb structure according to any one of Claims 1 to 20.

22. An exhaust gas treatment apparatus provided with the honeycomb structure according to any one of Claim 1 to 20 or the honeycomb catalyst body according to Claim 21.

23. A method for manufacturing a honeycomb structure to obtain a honeycomb structure according to any one of Claim 1 to 20, comprising the steps of: disposing a mask and/or a film having holes of a predetermined size on the two end faces of a honeycomb formed body obtained by forming clay into a honeycomb shape or the honeycomb structure obtained by firing the honeycomb formed body, and injecting each material into portions for forming the plugging portions and the additional plugging portions of the cells through the mask and/or the film to form the plugging portions and the additional plugging portions,
wherein, in the mask and/or the film, the size of the holes corresponding to the additional plugging portions is different from that of the holes corresponding to the plugging portions.

24. The method for manufacturing the honeycomb structure according to Claim 23, wherein the size of the holes corresponding to the additional plugging portions is larger than that of the holes corresponding to the plugging portions in the mask and/or the film.

25. The method for manufacturing the honeycomb structure according to Claim 23 or 24, wherein the material for the plugging portions and the additional plugging portions is injected by an indentation technique.

26. The method for manufacturing the honeycomb structure according to Claim 23 or 24, wherein the material for the plugging portions and the additional plugging portions is injected by a suction technique.

27. The method for manufacturing the honeycomb structure according to any one of Claim 23 or 26, wherein the injection of the material for the plugging portions and the injection of the material for the additional plugging portions are conducted separately, and each of the injections are conducted at one time or separately in several times.

28. The method for manufacturing the honeycomb structure according to any one of Claim 23 to 27, wherein firing is conducted after the plugging portions and the additional plugging portions are formed.
